# EUROPEAN PATENT APPLICATION

(11) **EP 4 811 464 A1**
(43) Date of publication of application: **23.09.2026**
(21) Application number: 24913266.3
(22) Date of filing: 21.08.2024
(51) Int. Cl.: H01M 4/66, H01M 10/0525, H01M 10/0562, H01M 4/62, H01M 4/02

(54) **ALL-SOLID-STATE BATTERY AND MANUFACTURING METHOD THEREFOR**

(30) Priority: 28.12.2023 KR 20230193906
(71) Applicant: SK On Co., Ltd., Seoul 03161 (KR)
(72) Inventor: PARK, Seohyeon, Daejeon 34124 (KR); SONG, Junghwan, Daejeon 34124 (KR)
(74) Representative: Prüfer & Partner mbB Patentanwälte · Rechtsanwälte
(86) International application number: PCT/KR2024/012409
(87) International publication number: WO 2025/143425

(57) **Abstract**

The present invention relates to an all-solid-state battery comprising: an electrode comprising a current collector layer and an active material layer; a solid electrolyte layer; a first conductive layer between the current collector layer and the active material layer; and a second conductive layer between the active material layer and the solid electrolyte layer. An all-solid-state battery according to one embodiment comprises both the first conductive layer and the second conductive layer, and thus ion and electron transfer efficiency is enhanced and an increase in resistance following a battery cycle is mitigated.

## Description

### [Technical Field]

The present disclosure relates to an all-solid-state battery and a method for manufacturing the same.

### [Background Art]

In recent years, battery development has been given importance, together with rapid spread of information-related device or communication devices such as cameras and mobile phones. In addition, development of a high-power or high-capacity battery for electric or hybrid vehicles is progressing, in the automobile industry and the like as well.

Since a commercially available lithium ion battery uses an electrolyte solution comprising a flammable organic solvent, improvement of a structure or material for installation of safety devices which suppress a temperature increase during short circuit or prevention of short circuits is needed. Regarding this, since an all-solid-state battery in which an electrolyte solution is changed into a solid electrolyte layer and a battery is made in an all-solid-state does not use a flammable organic solvent in the battery, simplification of safety devices is promoted and manufacturing costs and productivity are excellent.

### [Disclosure]

### [Technical Problem]

An object of the present disclosure is to provide an all-solid-state battery having ion and electron transfer efficiency.

Another object of the present disclosure is to provide a method for manufacturing the all-solid-state battery.

### [Technical Solution]

In one general aspect, an all-solid-state battery comprises: an electrode comprising a current collector layer and an active material layer, a solid electrolyte layer, a first conductive layer between the current collector layer and the active material layer, and a second conductive layer between the active material layer and the solid electrolyte layer.

In an example embodiment, the first conductive layer may comprise any one or more compounds selected from the group consisting of lithium-sulfide type compounds, lithium-oxide type compounds, lithium-hydride type compounds, and lithium-halide type compounds.

In an example embodiment, the first conductive layer may comprise 70 wt% to 99 wt% of any one or more compounds selected from the group consisting of the lithium-sulfide type compounds, the lithium-oxide type compounds, the lithium-hydride type compounds, and the lithium-halide type compounds.

In an example embodiment, the lithium-sulfide type compound may comprise any one or more compounds selected from the group consisting of lithium phosphorus sulfide (LPS), lithium tin sulfide (LTS), lithium tin phosphorus sulfide (LTPS), lithium germanium phosphorus sulfide (LGPS), lithium phosphorus sulfur halide (LPSHa), and lithium silicon phosphorus sulfur halide (LSiPSHa).

In an example embodiment, the first conductive layer may further comprise a binder.

In an example embodiment, the first conductive layer may further comprise a conducting material.

In an example embodiment, the second conductive layer may comprise any one or more compounds selected from the group consisting of lithium-sulfide type compounds, lithium-oxide type compounds, lithium-hydride type compounds, and lithium-halide type compounds.

In an example embodiment, the second conductive layer may comprise 70 wt% to 99 wt% of any one or more compounds selected from the group consisting of the lithium-sulfide type compounds, the lithium-oxide type compounds, the lithium-hydride type compounds, and the lithium-halide type compounds.

In an example embodiment, the second conductive layer may further comprise a binder.

In an example embodiment, the second conductive layer may further comprise a conducting material.

In an example embodiment, the first conductive layer and the second conductive layer may comprise the same lithium-sulfide type compound.

In an example embodiment, the first conductive layer and the second conductive layer may independently of each other comprise any one or more of a fluorine-based binder and a rubber-based binder.

In an example embodiment, the first conductive layer and the second conductive layer may comprise independently of each other polyvinylidene fluoride (PVDF), poly(vinylidene fluoride-co-hexafluoropropylene (PVDF-HFP), acrylonitrile butadiene rubber (NBR), polybutadiene rubber (BR), styrene-butadiene rubber (SBR), or a combination thereof.

In an example embodiment, the first conductive layer and the second conductive layer may comprise the same binder.

In an example embodiment, the first conductive layer and the second conductive layer may independently of each other comprise a carbon-based conducting material.

In an example embodiment, a thickness ratio between the first conductive layer and the second conductive layer may be 1:1.0 to 1:5.0.

In an example embodiment, the solid electrolyte layer may comprise any one or more compounds selected from the group consisting of lithium-sulfide type compounds, lithium-oxide type compounds, lithium-hydride type compounds, and lithium-halide type compounds.

In an example embodiment, the active material layer, the first conductive layer, and the second conductive layer may all comprise an argyrodite type compound.

In an example embodiment, the solid electrolyte layer, the first conductive layer, and the second conductive layer may all comprise an argyrodite type compound.

In an example embodiment, the active material layer may comprise any one or more of a fluorine-based binder and a rubber-based binder.

In an example embodiment, the all-solid-state battery may comprise a first negative electrode conductive layer as the first conductive layer and a second negative electrode conductive layer as the second conductive layer. That is, the all-solid-state battery may comprise a negative electrode comprising a negative electrode current collector layer and a negative electrode active material layer, a solid electrolyte layer, a positive electrode, a first negative electrode conductive layer between the negative electrode current collector layer and the negative electrode active material layer, and a second negative electrode conductive layer between the negative electrode active material layer and the solid electrolyte layer.

In an example embodiment, the negative electrode active material layer may comprise a rubber-based binder, and the first negative electrode conductive layer and the second negative electrode conductive layer may comprise a fluorine-based binder.

In an example embodiment, the all-solid-state battery may comprise a first positive electrode conductive layer as the first conductive layer and a second positive electrode conductive layer as the second conductive layer. That is, the all-solid-state battery may comprise a negative electrode, a solid electrolyte layer, a positive electrode comprising a positive electrode current collector layer and a positive electrode active material layer, a first positive electrode conductive layer between the positive electrode current collector layer and the positive electrode active material layer, and a second positive electrode conductive layer between the positive electrode active material layer and the solid electrolyte layer.

In an example embodiment, the positive electrode active material layer, the first positive electrode conductive layer, and the second positive electrode conductive layer may all comprise a fluorine-based binder; or the positive electrode active material layer may comprise a rubber-based binder, and the first positive electrode conductive layer and the second positive electrode conductive layer may comprise a fluorine-based binder.

### [Advantageous Effects]

The present disclosure relates to an all-solid-state battery having improved ion and electron transfer efficiency, and may effectively mitigate an increase in interfacial resistance due to an incomplete interface between battery cycle operations by introducing a conductive layer between a current collector and an active material layer and between an active material layer and a solid electrolyte layer simultaneously. Since the conductive layer in each interface facilitates lithium ion and electron transfer, the all-solid-state battery according to an implementation example may implement a sufficient charge/discharge capacity for use as a communication device or automotive battery.

### [Description of Drawings]

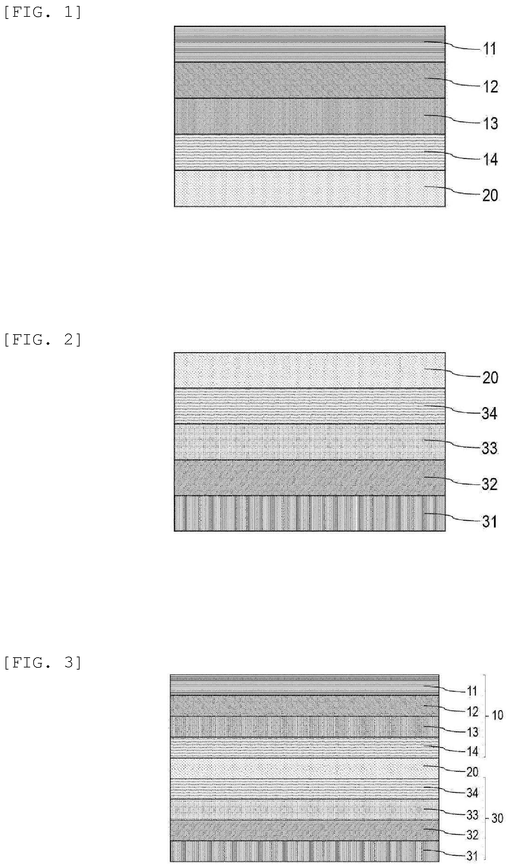

FIGS. 1 to 3 schematically show a stacked structure comprised in the all-solid-state battery according to an example embodiment.
FIG. 4 is a CC-CV charge/discharge graph of all-solid-state batteries manufactured in the example and the comparative examples.
FIG. 5 is a graph showing the results of electrochemical impedance spectroscopy (EIS) analysis of the all-solid-state batteries manufactured in the example and the comparative examples.

### [Best Mode]

Since the embodiments described in the present specification may be modified in many different forms, the technology according to an implement is not limited to the embodiments set forth herein. Furthermore, throughout the specification, unless otherwise particularly stated, the word "comprising", "comprising", "containing", "being provided with", or "having" does not mean the exclusion of any other constituent element, but rather means further inclusion of other constituent elements, and elements, materials, or processes which are not further listed are not excluded.

The numerical range used in the present specification comprises all values within the range comprising the lower limit and the upper limit, increments logically derived from the form and breadth of a defined range, all double limited values, and all possible combinations of the upper limits and the lower limits in the numerical range defined in different forms. As an example, when it is defined that a content of a composition is 10% to 80% or 20% to 50%, a numerical range of 10% to 50% or 50% to 80% should also be interpreted as described in the present specification. Unless otherwise defined in the present specification, values which may be outside a numerical range due to experimental error or rounding off of a value are also comprised in the defined numerical range.

Hereinafter, unless otherwise particularly defined in the present specification, "about" may be considered as a value within 30%, 25%, 20%, 15%, 10%, 5%, 3%, 2%, 1%, or 0.5% of a stated value.

Unless otherwise defined in the present specification, when it is said that a part such as a layer, a film, a thin film, a region, or a plate is "on" or "above" the other part, the part may be "directly on" the other part, and also, another part may intervene therebetween.

Hereinafter, the present disclosure will be described in detail (with reference to the accompanying drawings). However, it is only illustrative and the present disclosure is not limited to the specific embodiments which are illustratively described in the present disclosure.

An implementation example relates to an all-solid-state battery comprising: an electrode comprising a current collector layer and an active material layer, and a solid electrolyte layer, wherein a first conductive layer is provided between the current collector layer and the active material layer and a second conductive layer is provided between the active material layer and the solid electrolyte layer. The all-solid-state battery according to an implementation example may sufficiently secure an electron transfer path between the current collector layer and the active material layer and an ion transfer path between the active material layer and the solid electrolyte layer and effectively mitigate resistance in interfaces, by comprising both the first conductive layer and the second conductive layer. Thus, the all-solid-state battery according to an implementation example may implement stable charge/discharge efficiency.

In addition, the solid electrolyte layer used in an all-solid-state battery of high-energy density is required to have a thickness of about 50 µm or less, but may have a short circuit caused by a lithium dendrite due to a small thickness and low physical strength. The all-solid-state battery according to an implementation example may prevent a short circuit caused by dendrite growth occurring in a solid electrolyte grain boundary, by comprising a conductive layer between a solid electrolyte layer and an active material layer.

In an example embodiment, the first conductive layer and the second conductive layer may independently of each other comprise a conductive material, for example, a solid electrolyte. For example, the conductive layer may comprise a transition metal. The transition metal may comprise any one or more of Ti, Zr, Hf, Mn, Co, Ni, Cu, and/or Zn.

In an example embodiment, the first conductive layer may comprise any one or more compounds selected from the group consisting of lithium-sulfide type compounds, lithium-oxide type compounds, lithium-hydride type compounds, and lithium-halide type compounds, as a solid electrolyte.

In an example embodiment, the first conductive layer may comprise any one or more compounds selected from the group consisting of lithium-sulfide type compounds, lithium-oxide type compounds, lithium-hydride type compounds, and lithium-halide type compounds at 70 wt% to 99 wt%, 80 wt% to 99 wt%, 90 wt% to 99 wt%, 92 wt% to 98 wt%, 94 wt% to 96 wt%, or about 95.5 wt% of the weight of the first conductive layer.

In an example embodiment, the first conductive layer may comprise a lithium-sulfide type compound, specifically, may comprise the lithium-sulfide type compound may comprise any one or more compounds of lithium phosphorus sulfide (LPS) (e.g., Li₃PS₄), lithium tin sulfide (LTS) (e.g. Li₄SnS₄), lithium tin phosphorus sulfide (LTPS) (e.g. Li₁₀SnP₂S₁₂), lithium germanium phosphorus sulfide (LGPS) (e.g. Li₁₀GeP₂S₁₂), lithium phosphorus sulfur halide (LPSHa) (e.g. Li₆PS₅Cl, Li₇P₂S₈ClI, Li₇₋ₓ₁PS₆₋ₓ₁Haₓ₁ (0.2≤x1≤1.8, Ha=F, Cl, Br, or I)), and/or lithium silicon phosphorus sulfur halide (LSiPSHa) (e.g. Li_{6+x2-y1}Siₓ₂P₁₋ₓ₂S_{5-y1}Ha_{1+y1} (0<x2<0.4, 0≤y1≤0.5, Ha=F, Cl, Br, or I)), and more specifically, may comprise an argyrodite type compound (Li₆PS₅Cl), but is not limited thereto.

In an example embodiment, the first conductive layer and a slurry for forming the first conductive layer may further comprise a conducting material. The conducting material may be, for example, a linear conducting material and/or a point-type conducting material, and for example, may comprise a carbon-based conducting material such as graphite, carbon black, carbon nanotube, carbon nanofiber, carbon fiber, acetylene black, ketjen black, graphene, and vapor-grown carbon fiber (VGCF), and/or a metal-based conducting material comprising tin, tin oxide, titanium oxide, a perovskite material such as LaSrCoO₃ and LaSrMnO₃, and the like, but is not limited thereto.

Specifically, the first conductive layer may comprise the conducting material at 0.1 wt% to 5 wt%, 0.1 wt% to 3 wt%, 0.5 wt% to 3 wt%, 1 wt% to 3 wt%, 1 wt% to 2 wt%, or about 1.5 wt% of the weight of the first conductive layer.

In an example embodiment, the first conductive layer and the slurry for forming the first conductive layer may comprise a binder. The binder may comprise, for example, a non-water-based binder and/or a water-based binder. The binder may comprise, for example, a fluorine-based binder and/or a rubber-based binder. The binder may comprise, for example, polyvinylidene fluoride (PVDF), poly(vinylidene fluoride-co-hexafluoropropylene (PVDF-HFP), polyacrylonitrile, polymethylmethacrylate, acrylonitrile butadiene rubber (NBR), polybutadiene rubber (BR), and/or styrene-butadiene rubber (SBR), but is not limited thereto.

Specifically, the first conductive layer may comprise the binder at 1 wt% to 10 wt%, 1 wt% to 6 wt%, 2 wt% to 5 wt%, or about 3 wt% of the weight of the first conductive layer.

In an example embodiment, the second conductive layer or a slurry for forming a second conductive layer may comprise any one or more compounds selected from the group consisting of lithium-sulfide type compounds, lithium-oxide type compounds, lithium-hydride type compounds, and lithium-halide type compounds, as a solid electrolyte.

In an example embodiment, the second conductive layer may comprise any one or more compounds selected from the group consisting of lithium-sulfide type compounds, lithium-oxide type compounds, lithium-hydride type compounds, and lithium-halide type compounds at 70 wt% to 99 wt%, 80 wt% to 99 wt%, 90 wt% to 99 wt%, 92 wt% to 98 wt%, 94 wt% to 96 wt%, or about 95.5 wt% of the total weight of the second conductive layer.

In an example embodiment, the second conductive layer or the slurry for forming a second conductive layer may comprise a lithium-sulfide type compound, and specifically, the lithium-sulfide type compound may comprise any one or more compounds of lithium phosphorus sulfide (LPS) (e.g., Li₃PS₄), lithium tin sulfide (LTS) (e.g. Li₄SnS₄), lithium tin phosphorus sulfide (LTPS) (e.g. Li₁₀SnP₂S₁₂), lithium germanium phosphorus sulfide (LGPS) (e.g. Li₁₀GeP₂S₁₂), lithium phosphorus sulfur halide (LPSHa) (e.g. Li₆PS₅Cl, Li₇P₂S₈ClI, Li₇₋ₓ₁PS₆₋ₓ₁Haₓ₁ (0.2≤x1≤1.8, Ha=F, Cl, Br or I)), and/or lithium silicon phosphorus sulfur halide (LSiPSHa) (e.g. Li_{6+x2-y1}Siₓ₂P₁₋ₓ₂S_{5-y1}Ha_{1+y1} (0<x2<0.4, 0≤y1≤0.5, Ha=F, Cl, Br, or I)), and more specifically, may comprise an argyrodite type compound (Li₆PS₅Cl), but is not limited thereto.

The first conductive layer and the second conductive layer may be the same as each other or may comprise other solid electrolytes, for example, may comprise the same solid electrolyte, and specifically, may comprise the same lithium-sulfide type compound.

In an example embodiment, both the first conductive layer and the second conductive layer may comprise the lithium-sulfide type compound, specifically, may comprise lithium phosphorus sulfur halide (LPSHa) (e.g. Li₆PS₅Cl, Li₇P₂S₈ClI, Li₇₋ₓ₁PS₆₋ₓ₁Haₓ₁ (0.2≤x1≤1.8, Ha=F, Cl, Br or I)), and more specifically, may comprise an argyrodite type compound (Li₆PS₅Cl). Herein, the particle sizes of the argyrodite type compounds comprised in each layer may be the same as or different from each other. In an example embodiment, the second conductive layer and the slurry for forming a second conductive layer may further comprise a conducting material. The conducting material may be, for example, a linear conducting material and/or a point-type conducting material, and for example, may comprise a carbon-based conducting material such as graphite, carbon black, carbon nanotube, carbon nanofiber, carbon fiber, acetylene black, ketjen black, graphene, and vapor-grown carbon fiber (VGCF), and/or a metal-based conducting material comprising tin, tin oxide, titanium oxide, a perovskite material such as LaSrCoO₃ and LaSrMnO₃, and the like, but is not limited thereto.

Specifically, the second conductive layer may comprise the conducting material at 0.1 wt% to 5 wt%, 0.1 wt% to 3 wt%, 0.5 wt% to 3 wt%, 1 wt% to 3 wt%, 1 wt% to 2 wt%, or about 1.5 wt% of the weight of the second conductive layer.

The first conductive layer and the second conductive layer may be the same as each other or may comprise other conducting materials, for example, may comprise the same conducting material, and specifically, may all comprise a carbon-based conducting material.

In an example embodiment, the second conductive layer and the slurry for forming a second conductive layer may comprise a binder. The binder may comprise, for example, a non-water-based binder and/or a water-based binder. The binder may comprise, for example, a fluorine-based binder and/or a rubber-based binder. The binder may comprise, for example, polyvinylidene fluoride (PVDF), poly(vinylidene fluoride-co-hexafluoropropylene (PVDF-HFP), polyacrylonitrile, polymethylmethacrylate, acrylonitrile butadiene rubber (NBR), polybutadiene rubber (BR), and/or styrene-butadiene rubber (SBR), but is not limited thereto. The second conductive layer may comprise the binder at 1 wt% to 10 wt%, 1 wt% to 6 wt%, 2 wt% to 5 wt%, or about 3 wt% of the weight of the second conductive layer.

In an example embodiment, the first conductive layer and the second conductive layer may comprise the same or different binders, for example, may comprise the same binder, and for example, may all comprise a fluorine-based binder. Specifically, the first conductive layer and the second conductive layer may comprise polyvinylidene fluoride (PVDF), poly(vinylidene fluoride-co-hexafluoropropylene (PVDF-HFP), or a combination thereof.

In an example embodiment, the first conductive layer may have a thickness of 10 µm to 100 µm, 10 µm to 80 µm, or 20 µm to 70 µm. Specifically, the first positive electrode conductive layer may have a thickness of 10 µm to 50 µm, 10 µm to 40 µm, 10 µm to 30 µm, 20 µm to 30 µm, or about 24 µm, but is not necessarily limited thereto. The first negative electrode conductive layer may have a thickness of 40 µm to 100 µm, 40 µm to 80 µm, 50 µm to 70 µm, or about 60 µm, but is not necessarily limited thereto.

In an example embodiment, the second conductive layer may have a thickness of 30 µm to 150 µm, 30 µm to 120 µm, 30 µm to 100 µm, 40 µm to 90 µm, or 50 µm to 80 µm. Specifically, the second positive electrode conductive layer may have a thickness of 30 µm to 100 µm, 40 µm to 80 µm, 40 µm to 60 µm, 50 µm to 60 µm, or about 55 µm, but is not necessarily limited thereto. The second negative electrode conductive layer may have a thickness of 50 µm to 150 µm, 50 µm to 100 µm, 60 µm to 100 µm, 70 µm to 90 µm, or about 80 µm, but is not necessarily limited thereto.

In an example embodiment, a thickness ratio between the first conductive layer and the second conductive layer may be 1:1.0 to 1:5.0, 1:1.11 to 1:3.0, 1:1.1 to 1:2.5, or 1:1.3 to 1:2.3. Specifically, a thickness ratio between the first positive electrode conductive layer and the second positive electrode conductive layer may be 1:1.5 to 1:5.0, 1:1.5 to 1:3.0, 1:2.0 to 1:3.0, 1:2.0 to 1:2.5, or about 1:2.3, but is not necessarily limited thereto. A thickness ratio between the first negative electrode conductive layer and the second negative electrode conductive layer may be 1:1.0 to 1:2.0, 1:1.1 to 1:2.0, 1:1.1 to 1:1.5, or about 1:1.3, but is not necessarily limited thereto.

The solid electrolyte layer may have a thickness of 1 µm to 1000 µm, 1 µm to 800 µm, 10 µm to 800 µm, 10 µm to 200 µm, 30 µm to 150 µm, 30 µm to 100 µm, 500 µm to 900 µm, or 600 µm to 700 µm, but is not necessarily limited thereto and may be changed according to the purpose.

In an example embodiment, the solid electrolyte layer may comprise an inorganic solid electrolyte layer.

The solid electrolyte layer may comprise any one or more compounds selected from the group consisting of lithium-sulfide type compounds, lithium-oxide type compounds, lithium-hydride type compounds, and lithium-halide type compounds.

Specifically, the solid electrolyte layer may comprise a lithium-sulfide type compound, and specifically, the lithium-sulfide type compound may comprise any one or more compounds of lithium phosphorus sulfide (LPS) (e.g., Li₃PS₄), lithium tin sulfide (LTS) (e.g. Li₄SnS₄), lithium tin phosphorus sulfide (LTPS) (e.g. Li₁₀SnP₂S₁₂), lithium germanium phosphorus sulfide (LGPS) (e.g. Li₁₀GeP₂S₁₂), lithium phosphorus sulfur halide (LPSHa) (e.g. Li₆PS₅Cl, Li₇P₂S₈ClI, Li₇₋ₓ₁PS₆₋ₓ₁Haₓ₁ (0.2≤x1≤1.8, Ha=F, Cl, Br, or I)), and/or lithium silicon phosphorus sulfur halide (LSiPSHa) (e.g. Li_{6+x2-y1}Siₓ₂P₁₋ₓ₂S_{5-y1}Ha_{1+y1} (0<x2<0.4, 0≤y1≤0.5, Ha=F, Cl, Br, or I)), and more specifically, may comprise an argyrodite type compound (Li₆PS₅Cl), but is not limited thereto.

In an example embodiment, the solid electrolyte layer and the electrode may comprise the same or different solid electrolytes, specifically, the solid electrolyte layer, the first conductive layer, and the second conductive layer may comprise the same or different solid electrolytes, and for example, may comprise the same solid electrolyte. Herein, the solid electrolyte may comprise lithium phosphorus sulfur halide (LPSHa) (e.g. Li₆PS₅Cl, Li₇P₂S₈ClI, Li₇₋ₓ₁PS₆₋ₓ₁Haₓ₁ (0.2≤x1≤1.8, Ha=F, Cl, Br or I)), and more specifically, may comprise an argyrodite type compound. Herein, the particle sizes of the argyrodite type compounds comprised in each layer may be the same as or different from each other.

In an example embodiment, the active material layer may comprise a solid electrolyte and may comprise any one or more compounds selected from the group consisting of lithium-sulfide type compounds, lithium-oxide type compounds, lithium-hydride type compounds, and lithium-halide type compounds, as a solid electrolyte. Specifically, the solid electrolyte may comprise a lithium-sulfide type compound, and specifically, the lithium-sulfide type compound may comprise any one or more compounds of lithium phosphorus sulfide (LPS) (e.g., Li₃PS₄), lithium tin sulfide (LTS) (e.g. Li₄SnS₄), lithium tin phosphorus sulfide (LTPS) (e.g. Li₁₀SnP₂S₁₂), lithium germanium phosphorus sulfide (LGPS) (e.g. Li₁₀GeP₂S₁₂), lithium phosphorus sulfur halide (LPSHa) (e.g. Li₆PS₅Cl, Li₇P₂S₈ClI, Li₇₋ₓ₁PS₆₋ₓ₁Haₓ₁ (0.2≤x1≤1.8, Ha=F, Cl, Br, or I)), and/or lithium silicon phosphorus sulfur halide (LSiPSHa) (e.g. Li_{6+x2-y1}Siₓ₂P₁₋ₓ₂S_{5-y1}Ha_{1+y1} (0<x2<0.4, 0≤y1≤0.5, Ha=F, Cl, Br, or I)), and more specifically, may comprise an argyrodite type compound (Li₆PS₅Cl), but is not limited thereto.

Specifically, the solid electrolyte layer, and the active material layer, the first conductive layer, and the second conductive layer of the electrode may comprise the same or different solid electrolytes, and for example, may all comprise the argyrodite type compound. Herein, the particle sizes of the argyrodite type compounds comprised in each layer may be the same as or different from each other.

The active material layer may comprise a binder, and the binder may comprise, for example, a non-water-based binder and/or a water-based binder. The binder may comprise, for example, a fluorine-based binder and/or a rubber-based binder. The binder may comprise, for example, polyvinylidene fluoride (PVDF), poly(vinylidene fluoride-co-hexafluoropropylene (PVDF-HFP), polyacrylonitrile, polymethylmethacrylate, acrylonitrile butadiene rubber (NBR), polybutadiene rubber (BR), and/or styrene-butadiene rubber (SBR), but is not limited thereto.

In an example embodiment, when a structure in which a current collector layer, a first conductive layer, an active material layer, and a second conductive layer are sequentially stacked is referred to as a composite electrode, the all-solid-state battery according to an example embodiment may comprise a composite negative electrode 10 comprising a negative electrode current collector layer 11, a first negative electrode conductive layer 12, a negative electrode active material layer 13, and a second negative electrode conductive layer 14. Otherwise, the all-solid-state battery according to an example embodiment may comprise a composite positive electrode 30 comprising a composite positive electrode 30 comprising a positive electrode current collector layer 31, a first positive electrode conductive layer 32, a positive electrode active material layer 33, and a second positive electrode conductive layer 34.

The all-solid-state battery according to an example embodiment may comprise a composite negative electrode 10, a solid electrolyte layer 20, a positive electrode current collector layer 31, and a positive electrode active material layer 33, or the all-solid-state battery according to an example embodiment may comprise a negative electrode current collector layer 11, a negative electrode active material layer 13, a solid electrolyte layer 20, and a composite positive electrode 30, or the all-solid-state battery according to an example embodiment may comprise a composite negative electrode 10, a solid 20, and a composite positive electrode 30.

Another implementation example provides a method for manufacturing the all-solid-state battery according to the above implementation example. In an example embodiment, the method for manufacturing an all-solid-state battery comprises: applying a slurry for forming a first conductive layer on a current collector and then forming a first conductive layer; applying a slurry for forming an active material layer on the first conductive layer and then forming an active material layer; and applying a slurry for forming a second conductive layer on the active material layer and then forming a second conductive layer.

Hereinafter, the all-solid-state battery according to an implementation example will be described.

### [Positive electrode]

A positive electrode may comprise a positive electrode current collector and a positive electrode active material layer disposed on at least one surface of the positive electrode current collector.

The positive electrode according to an example embodiment (more specifically a positive electrode active material layer) may comprise a solid electrolyte, and for example, may comprise any one or more solid electrolytes selected from the group consisting of lithium-sulfide type compounds, lithium-oxide type compounds, lithium-hydride type compounds, and lithium-halide type compounds. A specific example of the solid electrolyte may comprise lithium phosphorus sulfide (LPS) (e.g. Li₃PS₄), lithium tin sulfide (LTS) (e.g. Li₄SnS₄), lithium tin phosphorus sulfide (LTPS) (e.g. Li₁₀SnP₂S₁₂), lithium germanium phosphorus sulfide (LGPS) (e.g. Li₁₀GeP₂S₁₂), lithium phosphorus sulfur halide (LPSHa) (e.g. Li₆PS₅Cl, Li₇P₂S₈ClI, Li₇₋ₓ₁PS₆₋ₓ₁Haₓ₁ (0.2≤x1≤1.8, Ha=F, Cl, Br, or I)), and/or lithium silicon phosphorus sulfur halide (LSiPSHa) (e.g. Li_{6+x2-y1}Siₓ₂P₁₋ₓ₂S_{5-y1}Ha_{1+y1} (0<x2<0.4, 0≤y1≤0.5, Ha=F, Cl, Br, or I)), but is not limited thereto. More specifically, the positive electrode (more specifically a positive electrode active material layer) may comprise an argyrodite type compound.

### (Positive electrode current collector)

The positive electrode current collector may comprise stainless steel, nickel, aluminum, titanium, or an alloy thereof. The positive electrode current collector may also comprise aluminum or stainless steel which is surface-treated with silver, carbon, nickel, or titanium. The thickness of positive electrode current collector may be, for example, 1 to 50 µm, but is not limited thereto.

### (Positive electrode material)

A positive electrode active material layer may comprise a positive electrode active material. The positive electrode active material may comprise a compound capable of reversibly intercalating and deintercalating lithium ions.

According to illustrative example embodiments, the positive electrode active material may comprise a lithium-nickel metal oxide. The lithium-nickel metal oxide may further comprise at least one of cobalt (Co), manganese (Mn), and aluminum (Al).

In some example embodiments, the positive electrode active material or the lithium-nickel metal oxide may comprise a layered structure or a crystal structure represented by the following Chemical Formula 1:

[Chemical Formula 1] LiₓNiₐM_{b}O_{2+z}

wherein 0.9≤x≤1.2, 0.6≤a≤0.99, 0.01≤b≤0.4, and -0.5≤z≤0.1. As described above, M may comprise Co, Mn, and/or Al.

The chemical structure represented by Chemical Formula 1 shows a bonding relationship comprised in the layered structure or the crystal structure of the positive electrode active material, but other additional elements are not excluded. For example, M comprises Co and/or Mn, and Co and/or Mn may be provided as a main active element of the positive electrode active material with Ni. Chemical Formula 1 is provided for expressing the bonding relationship of the main active elements and should be understood as a formula covering introduction or substitution of/with an additional element.

In an example embodiment, auxiliary elements which are added to the main active elements to enhance chemical stability of the positive electrode active material or the layered structure/crystal structure may be further comprised. The auxiliary element may be incorporated into the layered structure/crystal structure to form a bond, and in this case also, it should also be understood that the auxiliary element is comprised in the range of the chemical structure represented by Chemical Formula 1.

The auxiliary element may comprise, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, or Zr. The auxiliary element may act as, for example, an auxiliary active element which contributes to the capacity/output activity of the positive electrode active material with Co or Mn, like Al.

For example, the positive electrode active material or the lithium-nickel metal oxide may comprise a layered structure or a crystal structure represented by the following Chemical Formula 1-1:

[Chemical Formula 1-1] LiₓNiₐM1_{b1}M2_{b2}O_{2+z}

wherein M1 comprises Co, Mn, and/or Al, M2 comprises the auxiliary elements described above, and 0.9≤x≤1.2, 0.6≤a≤0.99, 0.01≤b1+b2≤0.4, and -0.5≤z≤0.1 are satisfied.

The positive electrode active material may further comprise a coating element or a doping element. For example, elements which are substantially identical or similar to the auxiliary elements described above may be used as a coating element or a doping element. For example, among the elements described above, a single element or a combination of two or more elements may be used as a coating element or a doping element.

The coating element or doping element may be present on the surface of the lithium-nickel metal oxide particle, or may penetrate through the surface of the lithium-nickel metal oxide particle and be comprised in the combined structure represented by Chemical Formula 1 or Chemical Formula 1-1.

The positive electrode active material may comprise a nickel-cobalt-manganese (NCM)-based lithium oxide. In this case, an NCM-based lithium oxide having an increased nickel content may be used.

Ni may be provided as a transition metal related to the output and capacity of the lithium secondary battery. Therefore, as described above, since a high-content (high-Ni) composition is adopted into the positive electrode active material, a high-capacity positive electrode and a high-capacity lithium secondary battery may be provided.

However, as the content of Ni increases, the long-term preservation stability and the life stability of the positive electrode or the secondary battery may be relatively reduced, and a side reaction with an electrolyte may be increased. However, according to illustrative example embodiments, the life stability and the capacity retention characteristics may be improved by Mn, while maintaining the electrical conductivity by comprising Co.

The content of Ni in the NCM-based lithium oxide (for example, the mole fraction of nickel of the total moles of nickel, cobalt, and manganese) may be 0.6 or more, 0.7 or more, or 0.8 or more. In some example embodiments, the content of Ni may be 0.8 to 0.95, 0.82 to 0.95, 0.83 to 0.95, 0.84 to 0.95, 0.85 to 0.95, or 0.88 to 0.95.

In some example embodiments, the positive electrode active material may comprise a lithium cobalt oxide-based active material, a lithium manganese oxide-based active material, a lithium nickel oxide-based active material, or a lithium iron phosphate (LFP)-based active material (for example, LiFePO₄).

In some example embodiments, the positive electrode active material may comprise, for example, a Mn-rich-based active material having a chemical structure or crystal structure represented by Chemical Formula 2, a Li-rich layered oxide (LLO)/over lithiated oxide (OLO)-based active material, or a Co-less-based active material:

[Chemical Formula 2] p[Li₂MnO₃]·(1-p)[Li_{q}JO₂]

wherein 0<p<1 and 0.9≤q≤1.2, and J comprises at least one element of Mn, Ni, Co, Fe, Cr, V, Cu, Zn, Ti, Al, Mg, and B.

### (Method for manufacturing positive electrode)

For example, the positive electrode active material may be mixed into the solvent to prepare a slurry for forming a positive electrode active material layer. A positive electrode current collector may be coated with the slurry for forming a positive electrode active material layer, and then dried and rolled manufacture a positive electrode active material layer. The coating process may be performed by a method such as gravure coating, slot die coating, multilayer simultaneous die coating, imprinting, doctor blade coating, dip coating, bar coating, and casting, but is not limited thereto. The positive electrode active material layer may further comprise a binder, and may optionally further comprise a conducting material, a thickener, and the like. Herein, the binder and the conducting material may be as described above.

### (Positive electrode solvent)

A non-limiting example of the solvent used in the preparation of the positive electrode mixture may comprise N-methyl-2-pyrrolidone (NMP), dimethyl formamide, dimethyl acetamide, N,N-dimethylaminopropylamine, ethylene oxide, tetrahydrofuran, isobutyl isobutyrate, butyl butyrate, xylene, anisole, and the like.

### (Positive electrode binder)

The positive electrode active material layer may comprise a binder, the binder may use the same or different binders as/from those used in the first conductive layer and the second conductive layer described above, and specifically, may use other binders.

The binder may comprise, for example, a non-water-based binder and/or a water-based binder. The binder may comprise, for example, a fluorine-based binder and/or a rubber-based binder. The binder may comprise polyvinylidene fluoride (PVDF), poly(vinylidene fluoride-co-hexafluoropropylene (PVDF-HFP), polyacrylonitrile, polymethyl methacrylate, acrylonitrile butadiene rubber (NBR), polybutadiene rubber (BR), styrene-butadiene rubber (SBR), and the like. In an example embodiment, as a positive electrode binder, a rubber-based binder may be used, and specifically, an acrylonitrile butadiene rubber (NMR), polybutadiene rubber (BR), styrene-butadiene rubber (SBR), and more specifically, acrylonitrile butadiene rubber (NMR) may be comprised.

According to an example embodiment, the positive electrode active material layer, the first positive electrode conductive layer, and the second positive electrode conductive layer may all comprise a fluorine-based binder; or the positive electrode active material layer may comprise a rubber-based binder, and the first positive electrode conductive layer and the second positive electrode conductive layer may comprise a fluorine-based binder.

### (Positive electrode conducting material)

The conducting material may be added for increasing conductivity of the positive electrode mixture layer and/or mobility of lithium ions or electrons. For example, the conducting material may be a linear conducting material and/or a dot-shaped conducting material, and, for example, may comprise a carbon-based conducting material such as graphite, carbon black, acetylene black, ketjen black, graphene, carbon nanotubes, vapor-grown carbon fiber (VGCF), carbon fiber, and carbon nanofiber, and/or a metal-based conducting material comprising tin, tin oxide, titanium oxide, perovskite materials such as LaSrCoO₃ and LaSrMnO₃, and the like, but is not limited thereto.

### (Positive electrode thickener/ dispersant)

If necessary, the positive electrode mixture may further comprise a thickener and/or a dispersant and the like. As an example embodiment, the positive electrode mixture may comprise a thickener such as carboxymethyl cellulose (CMC).

### [Negative electrode]

A negative electrode may comprise a negative electrode current collector and a negative electrode active material layer disposed on at least one surface of the negative electrode current collector.

The negative electrode (more specifically negative electrode active material layer) according to an example embodiment may comprise a solid electrolyte, and for example, may comprise any one or more solid electrolytes selected from the group consisting of lithium-sulfide type compounds, lithium-oxide type compounds, lithium-hydride type compounds, and lithium-halide type compounds. A specific example of the solid electrolyte may comprise lithium phosphorus sulfide (LPS) (e.g. Li₃PS₄), lithium tin sulfide (LTS) (e.g. Li₄SnS₄), lithium tin phosphorus sulfide (LTPS) (e.g. Li₁₀SnP₂S₁₂), lithium germanium phosphorus sulfide (LGPS) (e.g. Li₁₀GeP₂S₁₂), lithium phosphorus sulfur halide (LPSHa) (e.g. Li₆PS₅Cl, Li₇P₂S₈ClI, Li₇₋ₓ₁PS₆₋ₓ₁Haₓ₁ (0.2≤x1≤1.8, Ha=F, Cl, Br, or I)), and/or lithium silicon phosphorus sulfur halide (LSiPSHa) (e.g. Li_{6+x2-y1}Siₓ₂P₁₋ₓ₂S_{5-y1}Ha_{1+y1} (0<x2<0.4, 0≤y1≤0.5, Ha=F, Cl, Br, or I)), but is not limited thereto. More specifically, the negative electrode (more specifically negative electrode active material layer) may comprise an argyrodite type compound.

### (Negative electrode current collector)

A non-limiting example of the negative electrode current collector may comprise a copper foil, a nickel foil, a stainless-steel foil, a titanium foil, a nickel foam, a copper foam, a polymer substrate coated with a conductive metal, and the like. Though it is not limited thereto, the thickness of negative electrode current collector may be, for example, 1 to 50 µm.

### (Negative electrode material)

A negative electrode active material layer may comprise a negative electrode active material. As the negative electrode active material, a material capable of adsorbing or desorbing lithium ions may be used. For example, the negative electrode active material may be a carbon-based material such as crystalline carbon, amorphous carbon, carbon composite, and carbon fiber; a lithium metal; a lithium alloy; a silicon (Si)-containing material, a tin (Sn)-containing material, or the like.

An example of the amorphous carbon may comprise hard carbon, soft carbon, coke, mesocarbon microbead (MCMB), mesophase pitch-based carbon fiber (MPCF), and the like.

An example of the crystalline carbon may comprise graphite-based carbon such as natural graphite, artificial graphite, graphitized coke, graphitized MCMB, and graphitized MPCF.

The lithium metal may comprise a pure lithium metal or a lithium metal on which a protective layer for suppressing dendrite growth and the like is formed. In an example embodiment, a lithium metal-containing layer which is deposited or coated on the negative electrode current collector may be used as a negative electrode active material layer. In an example embodiment, a lithium thin film layer may be used as a negative electrode active material layer.

An element comprised in the lithium alloy may comprise aluminum, zinc, bismuth, cadmium, antimony, silicon, lead, tin, gallium, indium, or the like.

The silicon-containing material may provide more increased capacity characteristics. The silicon-containing material may comprise Si, SiOₓ (0<x<2), metal-doped SiOₓ (0<x<2), a silicon-carbon composite, and the like. The metal may comprise lithium and/or magnesium, and the metal-doped SiOₓ (0<x<2) may comprise metal silicate.

### (Method for manufacturing negative electrode)

For example, the negative electrode active material may be mixed into the solvent to prepare a negative electrode slurry. After coating/depositing the negative electrode current collector with the negative electrode slurry, drying and rolling may be performed to manufacture a negative electrode mixture layer. The coating process may be performed by a method such as gravure coating, slot die coating, multilayer simultaneous die coating, imprinting, doctor blade coating, dip coating, bar coating, and casting, but is not limited thereto. The negative electrode mixture layer may further comprise a binder, and may optionally further comprise a conducting material, a thickener, and the like.

In some example embodiments, the negative electrode may comprise a negative electrode active material layer in a lithium metal form formed by a deposition/coating process.

### (Negative electrode solvent)

A non-limiting example of the solvent for a negative electrode mixture may comprise water, pure water, deionized water, distilled water, ethanol, isopropanol, methanol, acetone, n-propanol, t-butanol, isobutyl isobutyrate, butyl butyrate, xylene, anisole, and the like.

### (Negative electrode binder/ conducting material/ thickener)

As the binder, the conducting material, and the thickener, the materials described above, which may be used in the manufacture of the positive electrode, may be used.

In some example embodiments, the negative electrode active material layer may comprise a rubber-based binder, and the first negative electrode conductive layer and the second negative electrode conductive layer may comprise a fluorine-based binder. In some example embodiments, a rubber-based binder such as a styrene-butadiene rubber (SBR)-based binder, carboxymethyl cellulose (CMC), a polyacrylic acid-based binder, a poly(3,4-ethylenedioxythiophene) (PEDOT)-based binder, and the like may be used as a negative electrode binder.

### [Electrode assembly]

According to example embodiments, the positive electrode, the negative electrode, and the solid electrolyte layer may be repeatedly disposed to form an electrode assembly. In some example embodiments, the electrode assembly may be a winding type, a stacking type, a zigzag (z)-folding type, or a stack-folding type. In some example embodiments, the electrode assembly may further comprise a separator, if necessary.

### [Solid electrolyte layer]

The solid electrolyte layer may comprise an organic solid electrolyte.

For example, the solid electrolyte layer may comprise lithium-sulfide type, lithium-oxide type, lithium-halide type, and lithium-halide type solid electrolytes. As a non-limiting example, the solid electrolyte layer may comprise any one or more compounds selected from the group consisting of lithium phosphorus sulfide (LPS), lithium tin sulfide (LTS), lithium tin phosphorus sulfide (LTPS), lithium germanium phosphorus sulfide (LGPS), lithium phosphorus sulfur halide (LPSHa), and lithium silicon phosphorus sulfur halide (LSiPSHa), and more specifically, may comprise Li₂S-P₂S₅, Li₂S-P₂S₅-LiCl, Li₂S-P₂S₅-LiBr, Li₂S-P₂S₅-LiCl-LiBr, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are positive numbers, and Z is Ge, Zn, or Ga), Li₂S-GeS₂, Li₂S-SiS₂-Li₃PO₄, Li₂S-SiS₂-LiₚMO_{q}, (p and q are positive number, and M is P, Si, Ge, B, Al, Ga, or In), Li₇₋ₓPS₆₋ₓClₓ (0≤x≤2), Li₇₋ₓPS₆₋ₓBrₓ (0≤x≤2), Li₇₋ₓPS₆₋ₓIₓ (0≤x≤2), and the like. These may be used alone or in combination of two or more. Specifically, the solid electrolyte layer may comprise an argyrodite type compound.

In an example embodiment, the solid electrolyte layer may comprise, for example, an oxide-based amorphous solid electrolyte such as Li₂O-B₂O₃-P₂O₅, Li₂O-SiO₂, Li₂O-B₂O₃, and Li₂O-B₂O₃-ZnO.

In an example embodiment, the solid electrolyte comprised in the solid electrolyte layer may be the same as the solid electrolyte comprised in the electrode (positive electrode and/or negative electrode) or different solid electrolytes, and specifically, may be the same solid electrolyte layer.

In an example embodiment, both the solid electrolyte layer and the electrode may comprise an argyrodite type compound. Specifically, the solid electrolyte layer, and the first conductive layer and the second conductive layer of the electrode may all comprise an argyrodite type compound. More specifically, the solid electrolyte layer, and the active material layer, the first conductive layer, and the second conductive layer of the electrode may all comprise an argyrodite type compound. Herein, the particle sizes of the argyrodite type compounds comprised in each layer may be the same as or different from each other.

### [Cell structure]

For example, electrode tabs (positive electrode tab and negative electrode tab) may protrude from the positive electrode current collector and the negative electrode current collector and extend to one side of a case, respectively. The electrode tabs may be connected to electrode leads (positive electrode lead and negative electrode lead) which are fused with the one side of the case and are extended or exposed to the outside of the case.

For example, a pouch-type case, an angular case, a cylindrical case, a coin-type case, and the like may be used.

### [Best Mode for Carrying Out the Invention]

Hereinafter, the examples will be further described with reference to the specific experimental examples. It is apparent to those skilled in the art that the examples and the comparative examples comprised in the experimental examples only illustrate an implementation example and do not limit the appended claims, and various modifications and alterations of the examples may be made within the range of the scope and spirit of the present disclosure, and these modifications and alterations will fall within the appended claims.

### <Experimental method>

### 1. Measurement of charge/discharge capacity

Charging was performed by applying a constant current at a current of a 0.1 C rate at 30°C until a battery voltage reached 4.2 V (vs. Li), and then when the battery voltage reached 4.2 V, applying a constant voltage until the current reached a 0.01 C rate. Discharging was performed with a constant current at 0.1 C rate until the voltage during the discharging reached 2.5 V (vs. Li).

### 2. Measurement of interfacial resistance

The resistance of the all-solid-state batteries manufactured in the examples and the comparative examples was measured at room temperature, at a 10 mV amplitude, under the conditions of 7 MHz to 1 Hz, using an electrochemical impedance spectrometer (EIS, VMP-300 Potentiostat).

### <Example>

A conducting material (carbon black) was added to a slurry comprising a lithium-sulfide type compound (Argyrodite Li₆PS₅Cl) having a bimodal particle size distribution and a binder (PVDF-HFP) and mixed to prepare a slurry for forming a conductive layer. At this time, a weight ratio of the lithium-sulfide type compound, the binder, and the conducting material was 95.5:3:1.5.

Li[Ni_{0.8}Co_{0.1}Mn_{0.1}]O₂ as a positive electrode active material, carbon black as a conducting material, neodymium polybutadiene (NdBR) as a binder, and Argyrodite Li₆PS₅Cl as a solid electrolyte were mixed at a weight ratio of 77:20:1.5:1.5 to prepare a slurry for forming a positive electrode active material.

SiC as a negative electrode active material, Argyrodite Li₆PS₅Cl as a solid electrolyte, carbon black as a conducting material, and styrene-butadiene rubber (SBR) as a binder were mixed at a weight ratio of 77:19.5:1.5:2 to prepare a slurry for forming a negative electrode active material.

The slurry for forming a conductive layer, the slurry for forming a positive electrode active material, and the slurry for forming a conductive layer were sequentially cast on an aluminum positive electrode current collector and then dried for 6 hours or more to manufacture a composite positive electrode comprising a positive electrode current collector layer (thickness: about 20 µm), a first positive electrode conductive layer (thickness: about 24 µm), a positive electrode active material layer (thickness: about 115 µm), and a second positive electrode conductive layer (thickness: about 55 µm).

The slurry for forming a conductive layer, the slurry for forming a negative electrode active material, and the slurry for forming a conductive layer were sequentially cast on a copper negative electrode current collector and then dried for 6 hours or more to manufacture a composite negative electrode comprising a negative electrode current collector layer (thickness: about 8 µm), a first negative electrode conductive layer (thickness: about 60 µm), a negative electrode active material layer (thickness: about 50 µm), and a second negative electrode conductive layer (thickness: about 80 µm).

Solid electrolyte powder (Li₆PS₅Cl) was added to a mold, a solid electrolyte layer (thickness: about 650 µm) was formed through a pressure of 1.4 ton, the composite positive electrode and the composite negative electrode manufactured above were stacked above and below the solid electrolyte layer, and then a pressure of 3.4 ton was applied to manufacture an all-solid-state battery.

### <Comparative Example 1>

An all-solid-state battery was manufactured in the same manner as in the method for manufacturing an all-solid-state battery according to the above Example, except for the step of forming a second positive electrode conductive layer and a second negative electrode conductive layer.

### <Comparative Example 2>

An all-solid-state battery was manufactured in the same manner as in the method for manufacturing an all-solid-state battery according to the above Example, except for the step of forming a first positive electrode conductive layer and a first negative electrode conductive layer.

### <Experimental Example>

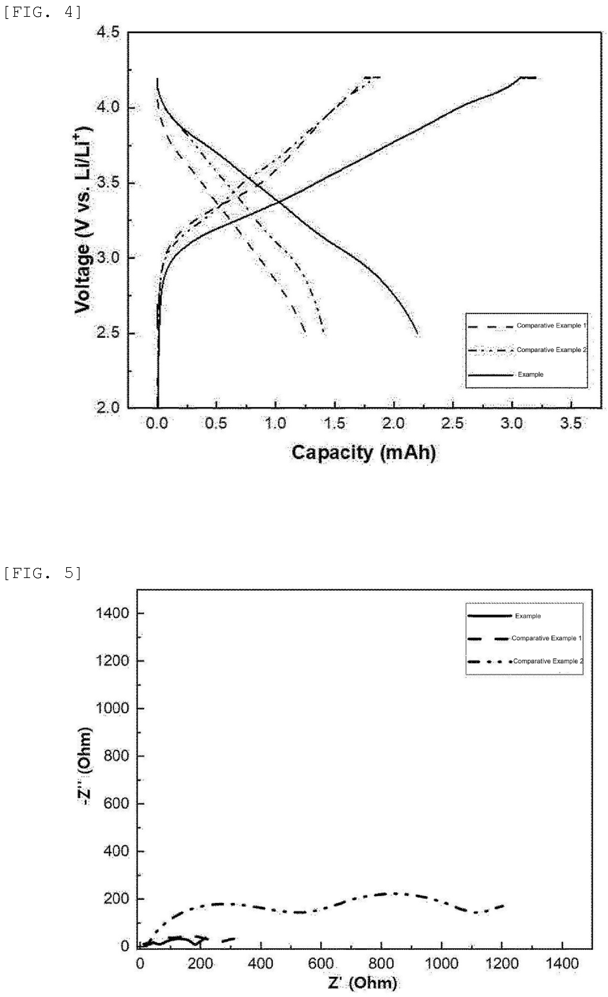

The charge/discharge capacity and the interfacial resistance of the all-solid-state batteries manufactured in the above example and comparative examples were measured according to the above <Experimental method>, and the results are shown in FIGS. 4 and 5, respectively. It was confirmed from the EIS analysis results that the impedance was more reduced in the battery according to the Example than in the battery according to Comparative Example 2 comprising no first conductive layer. In addition, it was confirmed from FIG. 4 that the battery according to the Example had a significantly increased charge/discharge capacity as compared with the batteries according to Comparative Examples 1 and 2. The all-solid-state battery of the Example had greatly improved ion conductivity between the solid electrolyte layer and the active material layer and the electron transfer efficiency between the current collector layer and the active material layer simultaneously, by comprising the conductive layer both between the solid electrolyte layer and the active material layer and between the current collector layer and the active material layer, and thus, had a greatly decreased resistance after cycles as compared with the batteries of Comparative Examples 1 and 2.

The above description is only an example to which the principle of the present disclosure is applied, and other constitutions may be further comprised without departing from the scope of the present disclosure. Hereinabove, though an implementation example has been described in detail by the examples and the experimental examples, the scope of an implementation example is not limited to specific examples, and should be construed by the appended claims.

### [Detailed Description of Main Elements]

- 10:: Composite negative electrode
- 11:: Negative electrode current collector layer
- 12:: First negative electrode conductive layer
- 13:: Negative electrode active material layer
- 14:: Second negative electrode conductive layer
- 20:: Solid electrolyte layer
- 30:: Composite positive electrode
- 31:: Positive electrode current collector layer
- 32:: First positive electrode conductive layer
- 33:: Positive electrode active material layer
- 34:: Second positive electrode conductive layer

## Claims

1. An all-solid-state battery comprising:
an electrode comprising a current collector layer and an active material layer;
a solid electrolyte layer;
a first conductive layer between the current collector layer and the active material layer; and
a second conductive layer between the active material layer and the solid electrolyte layer.

2. The all-solid-state battery of claim 1, wherein the first conductive layer and the second conductive layer independently of each other comprise any one or more compounds selected from the group consisting of lithium-sulfide type compounds, lithium-oxide type compounds, lithium-hydride type compounds, and lithium-halide type compounds.

3. The all-solid-state battery of claim 1, wherein the first conductive layer and the second conductive layer independently of each other comprise 70 wt% to 99 wt% of any one or more compounds selected from the group consisting of lithium-sulfide type compounds, lithium-oxide type compounds, lithium-hydride type compounds, and lithium-halide type compounds.

4. The all-solid-state battery of claim 2 or 3, wherein the lithium-sulfide type compound comprises any one or more compounds selected from the group consisting of lithium phosphorus sulfide (LPS), lithium tin sulfide (LTS), lithium tin phosphorus sulfide (LTPS), lithium germanium phosphorus sulfide (LGPS), lithium phosphorus sulfur halide (LPSHa), and lithium silicon phosphorus sulfur halide (LSiPSHa).

5. The all-solid-state battery of claim 1, wherein the first conductive layer and the second conductive layer comprise the same lithium-sulfide type compound.

6. The all-solid-state battery of claim 1, wherein the first conductive layer and the second conductive layer independently of each other comprise any one or more of a fluorine-based binder and a rubber-based binder.

7. The all-solid-state battery of claim 1, wherein the first conductive layer and the second conductive layer independently of each other comprise polyvinylidene fluoride (PVDF), poly(vinylidene fluoride-co-hexafluoropropylene (PVDF-HFP), acrylonitrile butadiene rubber (NBR), polybutadiene rubber (BR), styrene-butadiene rubber (SBR), or a combination thereof.

8. The all-solid-state battery of claim 1, wherein the first conductive layer and the second conductive layer comprise the same binder.

9. The all-solid-state battery of claim 1, wherein the first conductive layer and the second conductive layer independently of each other comprise a carbon-based conducting material.

10. The all-solid-state battery of claim 1, wherein a thickness ratio between the first conductive layer and the second conductive layer is 1:1.0 to 1:5.0.

11. The all-solid-state battery of claim 1, wherein the solid electrolyte layer comprises any one or more compounds selected from the group consisting of lithium-sulfide type compounds, lithium-oxide type compounds, lithium-hydride type compounds, and lithium-halide type compounds.

12. The all-solid-state battery of claim 1, wherein all of the active material layer, the first conductive layer, and the second conductive layer comprise an argyrodite type compound.

13. The all-solid-state battery of claim 1, wherein all of the solid electrolyte layer, the first conductive layer, and the second conductive layer comprise an argyrodite type compound.

14. The all-solid-state battery of claim 1, wherein the active material layer comprises any one or more of a fluorine-based binder and a rubber-based binder.

15. The all-solid-state battery of claim 1, wherein the battery comprises:
a negative electrode comprising a negative electrode current collector layer and a negative electrode active material layer;
the solid electrolyte layer;
a positive electrode;
a first negative electrode conductive layer between the negative electrode current collector layer and the negative electrode active material layer; and
a second negative electrode conductive layer between the negative electrode active material layer and the solid electrolyte layer.

16. The all-solid-state battery of claim 15, wherein the negative electrode active material layer comprises a rubber-based binder, and
the first negative electrode conductive layer and the second negative electrode conductive layer comprise a fluorine-based binder.

17. The all-solid-state battery of claim 1, wherein the battery comprises:
a negative electrode;
the solid electrolyte layer;
a positive electrode comprising a positive electrode current collector layer and a positive electrode active material layer;
a first positive electrode conductive layer between the positive electrode current collector layer and the positive electrode active material layer; and
a second positive electrode conductive layer between the positive electrode active material layer and the solid electrolyte layer.

18. The all-solid-state battery of claim 17,
wherein all of the positive electrode active material layer, the first positive electrode conductive layer, and the second positive electrode conductive layer comprise a fluorine-based binder; or
the positive electrode active material layer comprises a rubber-based binder, and the first positive electrode conductive layer and the second positive electrode conductive layer comprise a fluorine-based binder.
